# EUROPEAN PATENT APPLICATION

(11) **EP 3 751 703 A1**
(43) Date of publication of application: **16.12.2020**
(21) Application number: 19780568.2
(22) Date of filing: 04.04.2019
(51) Int. Cl.: H02J 50/80

(54) **DATA TRANSMISSION METHOD AND APPARATUS, STORAGE MEDIUM, AND ELECTRONIC DEVICE**

(30) Priority: 04.04.2018 CN 201810299725
(71) Applicant: GUANGDONG OPPO MOBILE TELECOMMUNICATIONS CORP., LTD., Wusha, Chang'an Dongguan Guangdong 523860 (CN)
(72) Inventor: QIAO, Jiadong, Dongguan, Guangdong 523860 (CN); ZHANG, Jialiang, Dongguan, Guangdong 523860 (CN); WAN, Shiming, Dongguan, Guangdong 523860 (CN); ZHAO, Yuqi, Dongguan, Guangdong 523860 (CN)
(74) Representative: Mewburn Ellis LLP
(86) International application number: PCT/CN2019/081428
(87) International publication number: WO 2019/192586

(57) **Abstract**

A method and apparatus for transmitting data, a storage medium, and an electronic device are provided. The method is applicable to a wireless charging apparatus. The method includes the following. When a first electronic device is detected to have established a wired connection with an external interface of the wireless charging apparatus, target data sent by the first electronic device are acquired. The target data are saved to a memory. The target data are transmitted to a second electronic device via a wireless data-transmitting unit.

## Description

### CROSS-REFERENCE TO RELATED APPLICATION(S)

This application claims priority to and the benefit of Chinese Application Serial No. 201810299725.3, entitled "METHOD AND APPARATUS FOR TRANSMITTING DATA, STORAGE MEDIUM, AND ELECTRONIC DEVICE" and filed on April 04, 2018, the entire disclosure of which is hereby incorporated by reference.

### TECHNICAL FIELD

This disclosure relates to the technical field of electronic devices, and more particularly to a method and apparatus for transmitting data, a storage medium, and an electronic device.

### BACKGROUND

With technology development, terminals (such as mobile phones) have increasingly diversified functions. For example, besides making a phone call, the terminal can be used for data sharing. When an old device is replaced with a new device, data in the old device usually need to be migrated to the new device. For example, when a user has a new mobile phone, all data in an old mobile phone need to be transferred to the new mobile phone. On the one hand, more and more data are stored in the mobile phone at present and these data mostly have occupied more than 30G (gigabyte). On the other hand, the network speed has not been increased very fast, so the data transmission speed has become a major pain point in mobile data transfer (that is, mobile phone data migration). For example, as to mobile transfer through a personal hotspot, due to limitation of speed in data transmission through the personal hotspot, currently, mobile transfer of data of about 30G at one time takes 10∼20 minutes, which has a low data transmission speed.

### SUMMARY

Implementations provide a method and apparatus for transmitting data, a storage medium, and an electronic device, which can increase data transmission speed between devices.

In a first aspect, a method for transmitting data is provided. The method is applicable to a wireless charging apparatus. The wireless charging apparatus includes an external interface, a wireless data-transmitting unit, and a memory. The method includes the following. When a first electronic device is detected to have established a wired connection with the external interface, target data sent by the first electronic device are acquired. The target data are saved to the memory. When the wireless charging apparatus is detected to have established a wireless data-transmission connection with a second electronic device, the target data are transmitted to the second electronic device via the wireless data-transmitting unit, where the wireless data-transmitting unit is a high carrier frequency based short-range wireless communication unit, and the second electronic device has a high carrier frequency based short-range wireless communication unit.

In a second aspect, an apparatus for transmitting data is provided. The apparatus is applicable to a wireless charging apparatus. The wireless charging apparatus includes an external interface, a wireless data-transmitting unit, and a memory. The apparatus includes an acquiring module, a saving module, and a transmitting module. The acquiring module is configured to acquire target data sent by a first electronic device, when the first electronic device is detected to have established a wired connection with the external interface. The saving module is configured to save the target data to the memory. The transmitting module is configured to transmit, via the wireless data-transmitting unit, the target data to a second electronic device when the wireless charging apparatus is detected to have established a wireless data-transmission connection with the second electronic device, where the wireless data-transmitting unit is a high carrier frequency based short-range wireless communication unit, and the second electronic device has a high carrier frequency based short-range wireless communication unit.

In a third aspect, a storage medium is provided. The storage medium is configured to store computer programs. The computer programs are applicable to a wireless charging apparatus. The wireless charging apparatus includes an external interface, a wireless data-transmitting unit, and a memory. The computer programs, when executed by the computer, are operable with the computer to: acquire target data sent by a first electronic device when the first electronic device is detected to have established a wired connection with the external interface; save the target data to the memory; and transmit, via the wireless data-transmitting unit, the target data to a second electronic device when the wireless charging apparatus is detected to have established a wireless data-transmission connection with the second electronic device, where the wireless data-transmitting unit is a high carrier frequency based short-range wireless communication unit, and the second electronic device has a high carrier frequency based short-range wireless communication unit.

In a fourth aspect, an electronic device is provided. The electronic device includes a processor and a wireless charging apparatus. The wireless charging apparatus includes an external interface, a wireless data-transmitting unit, and a memory. The processor is coupled with the wireless charging apparatus. The processor is configured to call computer programs stored in the memory to: acquire target data sent by a first electronic device when the first electronic device is detected to have established a wired connection with the external interface; save the target data to the memory; and transmit, via the wireless data-transmitting unit, the target data to a second electronic device when the wireless charging apparatus is detected to have established a wireless data-transmission connection with the second electronic device, where the wireless data-transmitting unit is a high carrier frequency based short-range wireless communication unit, and the second electronic device has a high carrier frequency based short-range wireless communication unit.

### BRIEF DESCRIPTION OF THE DRAWINGS

The technical solution and advantages of implementations will become apparent from elaboration of implementations in conjunction with the accompanying drawings.
FIG 1 is a schematic structural diagram of a wireless charging system according to implementations.
FIG 2 is a schematic structural diagram of a wireless charging apparatus according to implementations.
FIG 3 is a schematic structural diagram of a wireless charging system according to other implementations.
FIG 4 is a schematic structural diagram of a short-range wireless communication system according to implementations.
FIG 5 is a schematic flowchart of a method for transmitting data according to implementations.
FIG 6 is a schematic flowchart of a method for transmitting data according to other implementations.
FIG 7 is a schematic structural diagram of an apparatus for transmitting data according to implementations.
FIG 8 is a schematic structural diagram of an apparatus for transmitting data according to other implementations.
FIG 9 is a schematic structural diagram of an electronic device according to implementations.
FIG 10 is a schematic structural diagram of an electronic device according to other implementations.

### DETAILED DESCRIPTION

In wireless charging technology, power delivery can be achieved without a cable. Therefore, wireless charging technology is increasingly more popular among consumers. According to conventional wireless charging technology, an adaptor is generally coupled with a wireless charging apparatus (such as a wireless charging base), and via the wireless charging apparatus, an output power of the adaptor is delivered to a device to-be-charged wirelessly (for example, via an electromagnetic wave) for wireless charging of the device to-be-charged. According to the wireless charging principle, the wireless charging can be in the manner of magnetic coupling (or electromagnetic induction), magnetic resonance, and radio waves.

At present, main wireless charging standard includes QI standard, power matters alliance (PMA) standard, and alliance for wireless power (A4WP) standard. Under the QI standard and the PMA standard, wireless charging is performed in the manner of magnetic coupling, and under the A4WP standard, wireless charging is performed in the manner of magnetic resonance.

According to implementations herein, functions of the wireless charging apparatus are extended, such that the wireless charging apparatus can, besides performing wireless charging, perform wireless data transmission while performing wireless charging. Such wireless data transmission does not require various types of data cables, which can simplify operations of a user. On the other hand, by adopting wireless data transmission, it is possible to solve problems in the related art such as low transmission speed, network restriction, and the like caused by adopting wired data transmission, wireless fidelity (Wi-Fi), mobile communication network, Bluetooth, etc.

Hereinafter, a wireless charging system and a wireless charging apparatus provided in implementations will be described in detail in connection with the accompanying drawings.

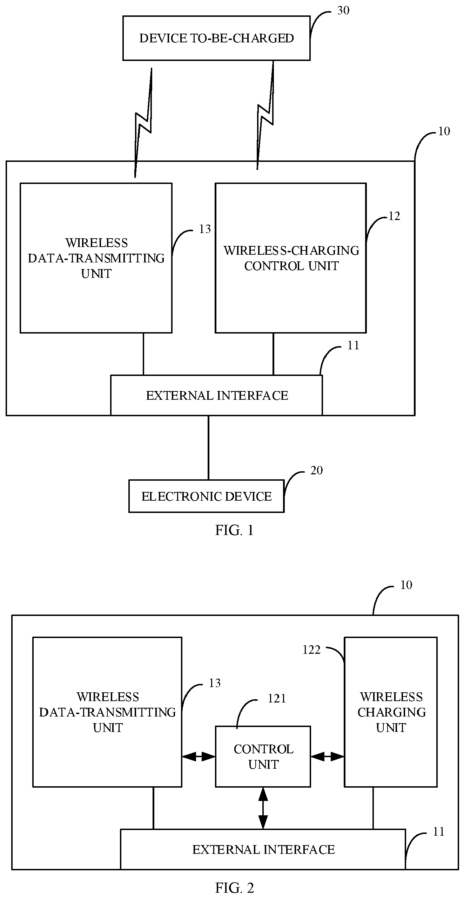

FIG 1 is a schematic structural diagram of a wireless charging system according to implementations. As illustrated in FIG 1, the wireless charging system includes a wireless charging apparatus 10, an electronic device 20 that has data processing and transmission functions, and a device to-be-charged 30.

The wireless charging apparatus 10 includes an external interface 11, a wireless-charging control unit 12, and a wireless data-transmitting unit 13. The wireless-charging control unit 12 can be configured to perform wireless charging on the device to-be-charged 30 according to an output power of the electronic device 20 when the external interface 11 is coupled with the electronic device 20. The wireless data-transmitting unit 13 is configured to transmit, through a wireless link, data (for example, data content or data file) stored in the electronic device 20 to the device to-be-charged 30, or to transmit, through a wireless link, data (for example, data content or data file) stored in the device to-be-charged 30 to the electronic device 20, while the wireless-charging control unit 12 is performing wireless charging on the device to-be-charged 30 according to the output power of the electronic device 20 or the device to-be-charged 30 is placed on the wireless charging apparatus 10.

The wireless charging apparatus 10 provided herein can not only perform wireless charging on the device to-be-charged according to the output power of the electronic device, but also achieve wireless data transmission between the electronic device and the device to-be-charged during wireless charging. As such, no extra data cable is needed, which simplifies user's operations. On the other hand, fast data transmission can be achieved without being limited by network.

The device to-be-charged according to implementations may be a terminal. The "terminal" can include but is not limited to a device configured via a wired line and/or a wireless interface to receive/transmit communication signals. Examples of the wired line may include, but are not limited to, at least one of a public switched telephone network (PSTN), a digital subscriber line (DSL), a digital cable, a direct connection cable, and/or another data connection line or network connection line. Examples of the wireless interface may include, but are not limited to, a wireless interface with a cellular network, a wireless local area network (WLAN), a digital television network (such as a digital video broadcasting-handheld (DVB-H) network), a satellite network, an amplitude modulation-frequency modulation (AM-FM) broadcast transmitter, and/or with another communication terminal. A communication terminal configured to communicate via a wireless interface may be called a "wireless communication terminal", a "wireless terminal", and/or a "mobile terminal". Examples of a mobile terminal may include, but are not limited to, a satellite or cellular telephone, a personal communication system (PCS) terminal capable of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and/or other electronic devices equipped with radio telephone receiver such as a conventional laptop or a handheld receiver. In addition, the device to-be-charged or the terminal according to implementations may further include a power bank. The power bank can be charged by an adaptor to store energy to be provided for other electronic devices.

The type of the electronic device 20 can be various in implementations. In some examples, the electronic device 20 may be a host device. In other examples, the electronic device 20 may be a mobile phone, a smart watch, a tablet PC, a notebook computer, a smart TV, or the like.

The type of the wireless charging apparatus 10 is not limited in implementations. For example, the wireless charging apparatus 10 may be a wireless charging base, or may be other devices which can convert an electrical signal into an electromagnetic wave for wireless charging.

There is no particular restriction on the number and type of the external interface(s) 11 of the wireless charging apparatus 10 in implementations. In some examples, the wireless charging apparatus 10 may include one external interface 11. The one external interface 11 can be configured to both receive a charging power from an external device and transmit data provided by the external device. In other examples, the wireless charging apparatus 10 may include multiple external interfaces 11. For example, the wireless charging apparatus 10 may include two external interfaces 11. One of the two external interfaces is configured to be coupled with the electronic device, and the other one is configured to be coupled with an adaptor. The external interface(s) 11 of the wireless charging apparatus 10 may include, for example, at least one of a serial interface, a universal serial bus (USB) interface, and the like. The USB interface may be, for example, a USB 2.0 interface, a USB 3.0 interface, or a TYPE-C interface.

There is no particular restriction on the manner of wireless charging performed by the wireless-charging control unit 12 in implementations. For example, the wireless-charging control unit 12 can perform wireless charging based on at least one of magnetic coupling, magnetic resonance, and radio waves.

In some implementations, the wireless-charging control unit 12 can perform wireless charging based on a conventional wireless charging standard. For example, the wireless-charging control unit 12 can perform wireless charging based on one of the following standards: QI standard, A4WP standard, and PMA standard.

The type of data transmitted by the wireless data-transmitting unit 13 is not specifically restricted in implementations. For example, the wireless data-transmitting unit 13 can transmit at least one of: data in USB protocol format, data in DP protocol format, and data in MHL protocol format. In addition, the wireless data-transmitting unit 13 can be configured to transmit data in multiple protocol formats. For example, the wireless data-transmitting unit 13 can transmit both data in USB protocol format and data in MHL protocol format. The wireless data-transmitting unit 13 may be a high carrier frequency based short-range wireless communication unit.

The structure of the wireless charging apparatus 10 can be various and any circuit structure can be adopted as long as functions of the wireless charging apparatus 10 can be implemented. For example, as illustrated in FIG 2, the wireless charging apparatus 10 includes a control unit 121 (such as a micro control unit (MCU)), a wireless charging unit 122, and the wireless data-transmitting unit 13. The control unit 121 and the wireless charging unit 122 can be configured to cooperatively implement functions of the wireless-charging control unit 12. On the other hand, a wireless data-transmission function of the wireless data-transmitting unit 13 can also be achieved under control of the control unit 121. In addition, via the external interface 11, the control unit 121 can communicate with an external device and/or interchange information with the external device. In other words, control functions of the wireless charging apparatus 10 can be all integrated into the control unit 121, and the control unit 121 is responsible for unified control. However, this disclosure is not limited thereto and alternatively, the wireless charging apparatus 10 can be provided with multiple control units for performing different control functions respectively.

The control unit 121 can communicate with the device to-be-charged 30, to determine the type of the device to-be-charged 30 and determine a power grade that matches the device to-be-charged 30. As an example, an input power of the external interface 11 is a direct current (DC) power. The wireless charging unit 122 can include a converting circuit, a coil, and other elements. The converting circuit can be configured to convert a DC inputted from the external interface 11 into an alternating current (AC). The coil can be configured to convert the AC into an electromagnetic wave to be transmitted to a receiving end.

As an example, the electronic device 20 is a host device, the control unit 121 is the MCU, and the wireless charging apparatus 10 is the wireless charging base. When the host device is coupled with the wireless charging base via an external interface of the wireless charging base, the MCU determines a power that can be provided by the host device and the type of data that can be interchanged by the host device (such as data in USB 2.0 format, data in USB 3.0 format, image data, audio and video data, etc.). Then according to rules defined by the conventional wireless charging standard (such as QI standard, A4WP standard, or the like), the wireless charging apparatus 10 can provide multiple power grades for the device to-be-charged according to the power that can be provided by the host device. Examples of power grades include a low power grade (such as 5W (watt)) and a middle power grade (such as 10W and/or 15W). If the host device can provide a higher power, the conventional wireless charging standard (such as QI standard, A4WP standard, or the like) can be extended to provide a higher power grade for the device to-be-charged.

It should be noted that, the above describes wireless charging performed by the wireless charging apparatus 10 based on the conventional wireless charging standard for illustrative purpose, but this disclosure is not limited thereto. The wireless charging apparatus 10 can also perform wireless charging based on a customized private standard or protocol. For example, the wireless charging apparatus 10 can determine the type of the device to-be-charged, determine the power grade that matches the device to-be-charged, or the like based on the customized private standard or protocol.

In some examples, the wireless charging apparatus 10 can be coupled with an adaptor via the external interface 11 and perform wireless charging on the device to-be-charged 30 according to an output power of the adaptor. In other examples, the wireless charging apparatus 10 can function as the adaptor, that is, functions of the adaptor can be integrated into the wireless charging apparatus 10. The adaptor referred to herein may be a common adaptor in the related art, or may be an adaptor with an adjustable output power provided in implementations.

In wireless charging, a first possible manner is to couple the adaptor with the wireless charging apparatus, to perform wireless charging on the device to-be-charged according to the output power of the adaptor. In this situation, the wireless charging apparatus is mainly configured to convert the output power of the adaptor into a wireless power signal to be transmitted to the device to-be-charged.

A second possible manner is to directly use the wireless charging apparatus as the adaptor (that is, functions of the adaptor are integrated into the wireless charging apparatus), and the device to-be-charged is charged according to an output power of the wireless charging apparatus. In this situation, besides converting an AC through voltage transformation, rectification, etc., the wireless charging apparatus is responsible for transmitting wirelessly to the device to-be-charged voltage and current that are subjected to conversion, to perform wireless charging on the device to-be-charged. In the following, the above two manners will be described in detail with reference to specific examples.

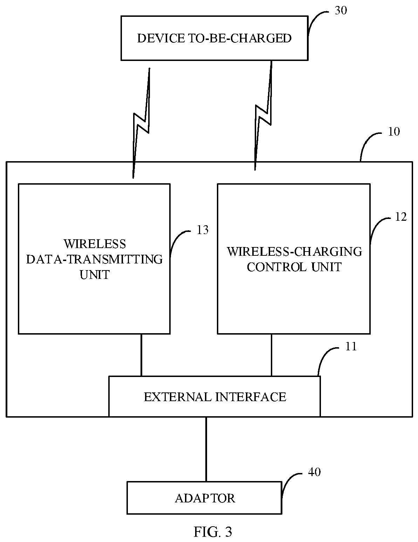

In the first possible manner, as illustrated in FIG 3, the external interface 11 is coupled with an adaptor 40. The wireless charging apparatus 10 is mainly configured to perform wireless charging when the external interface 11 is coupled with an adaptor 40. In this case, the wireless data-transmitting unit 13 may be in an idle state (that is, non-working state), or may transmit parameter information related to wireless charging.

The type of the adaptor 40 is not particularly limited in implementations. For example, the adaptor 40 can be the common adaptor in the related art. For another example, the adaptor 40 can be the adaptor with an adjustable output power provided in implementations, where such adaptor usually needs to perform two-way communication with the outside to negotiate or control an output power of the adaptor.

As an example, the adaptor 40 is the common adaptor. When the wireless charging apparatus 10 determines that the external interface 11 is coupled with the common adaptor, the wireless-charging control unit 12 can provide, according to rules defined by a wireless charging standard (such as QI standard, A4WP standard, or the like), one or multiple power grades for the device to-be-charged. Examples of power grades include the low power grade (such as 5W) and the middle power grade (such as 10W and/or 15W). Upon detecting the device to-be-charged, the wireless charging apparatus 10 can communicate according to a wireless charging protocol provided by the wireless charging standard, to determine the type of the device to-be-charged and determine a power grade that matches the device to-be-charged. Then, a wireless charging base can perform wireless charging on the device to-be-charged according to the power grade that matches the device to-be-charged.

As another example, the adaptor 40 is the adaptor with an adjustable output power. The wireless-charging control unit 12 of the wireless charging apparatus 10 can perform two-way communication with the adaptor, to control (or negotiate) the output power of the adaptor and perform wireless charging on the device to-be-charged 30 according to the output power of the adaptor. As described above, compared with the common adaptor in the related art, the adaptor with an adjustable output power provided herein can provide a higher output power, thereby providing a foundation for quick charging in the field of wireless charging.

Upon detecting that the external interface 11 is coupled with the adaptor, the wireless charging apparatus 10 can perform two-way communication with the adaptor. If the adaptor can support two-way communication, it indicates that the adaptor is the adaptor with an adjustable output power described above. In this situation, the wireless-charging control unit 12 of the wireless charging apparatus 10 can provide, according to rules defined by the wireless charging standard (such as QI standard, A4WP standard, or the like), one or multiple power grades for the device to-be-charged. Examples of power grades include the low power grade (such as 5W) and the middle power grade (such as 10W and/or 15W). Alternatively, the wireless-charging control unit 12 can extend the conventional wireless charging standard (such as QI standard, A4WP standard, or the like), such that the wireless-charging control unit 12 can support a higher power grade. In this way, upon detecting that the external interface 11 is coupled with the adaptor with an adjustable output power, the wireless charging apparatus 10 can provide a higher power grade for the device to-be-charged.

In some examples, the wireless charging apparatus 10 can perform two-way communication with the device to-be-charged based on a two-way communication protocol according to implementations (for details thereof, reference can be made to the foregoing description of a two-way communication process and an instruction set between the adaptor and the device to-be-charged), to provide the middle power grade or even provide a higher power grade.

As an example, the wireless charging apparatus 10 is the wireless charging base. When the device to-be-charged is coupled with the wireless charging base, the wireless charging base can perform two-way communication with the device to-be-charged based on the two-way communication protocol provided herein, to determine the type of the device to-be-charged and determine a power that matches the device to-be-charged ("power matching" for short). Then, the wireless charging base can perform wireless charging on the device to-be-charged according to the matched power. It should be noted that, power matching may involve current matching and voltage matching. For example, when the matched power is 1 OW, the matched voltage and the matched current may be 5V (volt) and 2A (ampere) respectively, or may be 10V and 1A respectively.

It should be noted that, there is no specific restriction on the content communicated between the wireless-charging control unit 12 and the adaptor in implementations, as long as control or negotiation of the output power of the adaptor can be achieved. The following will exemplify the content communicated between the wireless-charging control unit 12 and the adaptor with specific examples.

In some examples, the adaptor 40 is operable with any one of a first charging mode and a second charging mode, and a speed at which the adaptor 40 charges the device to-be-charged 30 in the second charging mode is higher than that in the first charging mode. The wireless-charging control unit 12 can perform two-way communication with the adaptor 40 to control the output power of the adaptor 40 as follows. The wireless-charging control unit 12 performs two-way communication with the adaptor 40 to control the output power of the adaptor 40 in the second charging mode.

It should be noted that, the output power of the adaptor 40 in the second charging mode can be determined by the wireless charging apparatus 10 on its own. Alternatively, the output power of the adaptor 40 in the second charging mode can be determined by the wireless charging apparatus 10 according to a state or capability of the device to-be-charged. Alternatively, the output power of the adaptor 40 in the second charging mode can be determined by the device to-be-charged 30. In this situation, the wireless charging apparatus 10 is mainly responsible for communication of information or instructions between the adaptor 40 and the device to-be-charged 30.

In some examples, the wireless-charging control unit 12 can perform two-way communication directly with the adaptor 40, to negotiate or control the output power of the adaptor in the second charging mode. For example, the wireless-charging control unit 12 can perform two-way communication with the adaptor 40 according to the two-way communication protocol provided herein (for details thereof, reference can be made to the foregoing description of the two-way communication process and the instruction set between the adaptor and the device to-be-charged).

In some examples, the wireless-charging control unit 12 can perform two-way communication with the adaptor 40 to control the output power of the adaptor 40 in the second charging mode as follows. The wireless-charging control unit 12 performs two-way communication with the adaptor 40 to negotiate a charging mode of the adaptor 40.

For example, the adaptor 40 can send a first instruction to the wireless-charging control unit 12 to inquire the wireless-charging control unit 12 whether to enable (that is, switch on) the second charging mode. The wireless-charging control unit 12 sends to the adaptor a reply instruction of the first instruction, and the reply instruction is indicative of whether the wireless-charging control unit 12 agrees to enable the second charging mode. When the reply instruction of the first instruction indicates that the wireless-charging control unit 12 agrees to enable the second charging mode, the adaptor enables the second charging mode.

The manner in which the wireless-charging control unit 12 determines whether to enable the second charging mode can be various in implementations. As an example, the wireless-charging control unit 12 can directly agree to enable the second charging mode. As another example, the wireless-charging control unit 12 can send the first instruction to the device to-be-charged 30, and the device to-be-charged 30 determines whether to enable the second charging mode. As another example, the wireless-charging control unit 12 can determine, according to the state of the device to-be-charged 30, whether to enable the second charging mode. Examples of the state of the device to-be-charged 30 may include whether the device to-be-charged is operable with the second charging mode, and/or a present electric quantity of the device to-be-charged.

In some examples, the wireless-charging control unit 12 can perform two-way communication with the adaptor 40 to control the output power of the adaptor 40 in the second charging mode as follows. The wireless-charging control unit 12 performs two-way communication with the adaptor 40 to control an output voltage of the adaptor in the second charging mode.

For example, the adaptor 40 can send a second instruction to the wireless-charging control unit 12 to inquire the wireless-charging control unit 12 whether a present output voltage of the adaptor 40 is suitable. The wireless-charging control unit 12 can send to the adaptor 40 a reply instruction of the second instruction, and the reply instruction indicates that the present output voltage of the adaptor 40 is suitable, high (that is, at a high voltage level), or low (that is, at a low voltage level), and as such, the adaptor 40 can adjust the output voltage thereof according to the reply instruction of the second instruction.

There is no particular restriction on the manner in which the wireless-charging control unit 12 determines the output voltage of the adaptor in the second charging mode in implementations. In some examples, the wireless-charging control unit 12 can determine on its own the output voltage of the adaptor in the second charging mode. For instance, upon detecting that the adaptor is the adaptor with an adjustable output power, the wireless-charging control unit 12 can directly adjust the output voltage of the adaptor 40 to a preset high grade. In other examples, the wireless-charging control unit 12 can communicate with the device to-be-charged 30 and control, according to information fed back by the device to-be-charged 30, the output voltage of the adaptor in the second charging mode.

In some examples, the wireless-charging control unit 12 can perform two-way communication with the adaptor to control the output power of the adaptor in the second charging mode as follows. The wireless-charging control unit 12 performs two-way communication with the adaptor to control an output current of the adaptor in the second charging mode.

For example, the adaptor 40 can send a third instruction to the wireless-charging control unit 12, to inquire the wireless-charging control unit 12 a current value of the output current of the adaptor or a maximum charging current that can be supported by the wireless charging apparatus. The wireless-charging control unit 12 can send to the adaptor 40 a reply instruction of the third instruction, and the reply instruction is indicative of the current value of the output current of the adaptor or the maximum charging current that can be supported by the wireless charging apparatus, and as such, the adaptor 40 can adjust the output current thereof according to the reply instruction of the third instruction.

There is no particular restriction on the manner in which the wireless-charging control unit 12 determines the output current of the adaptor in the second charging mode in implementations. In some examples, the wireless-charging control unit 12 can control on its own the output current of the adaptor in the second charging mode. For instance, upon detecting that the adaptor is the adaptor with an adjustable output power, the wireless-charging control unit 12 can directly adjust the output current of the adaptor to a preset high grade. In other examples, the wireless-charging control unit 12 can communicate with the device to-be-charged 30 and control, according to information fed back by the device to-be-charged 30, the output current of the adaptor in the second charging mode.

It should be noted that, there is no specific restriction on the manner in which the wireless-charging control unit 12 performs wireless charging on the device to-be-charged 30 according to the output power of the adaptor 40 in implementations. In some examples, the wireless-charging control unit 12 can perform wireless charging on the device to-be-charged 30 still according to a wireless charging protocol provided by the conventional wireless charging standard (such as QI standard or A4WP standard). In other examples, the wireless-charging control unit 12 can perform wireless charging on the device to-be-charged 30 according to the two-way communication protocol provided herein (for details thereof, reference can be made to the foregoing description of the two-way communication process and the instruction set between the adaptor and the device to-be-charged).

The wireless-charging control unit 12 can perform wireless charging on the device to-be-charged 30 according to the output power of the adaptor 40 as follows. The wireless-charging control unit 12 performs two-way communication with the device to-be-charged 30, to inquire whether the device to-be-charged 30 agrees to enable the second charging mode. When the device to-be-charged 30 agrees to enable the second charging mode, the wireless-charging control unit 12 performs wireless charging on the device to-be-charged 30 according to the output power of the adaptor 40 in the second charging mode.

A communication process of conventional wireless charging only includes determination of the type of the device to-be-charged and determination of the power grade. According to the technical solution provided in implementations, based on a customized two-way communication protocol, the type of the adaptor (that is, whether the adaptor is operable with the second charging mode) is determined first. As such, the two-way communication protocol provided herein can be applied to wireless charging, which can provide a foundation for quick charging in the field of wireless charging.

In some examples, the wireless-charging control unit 12 can be further configured to perform two-way communication with the device to-be-charged 30 to adjust an output power of the wireless-charging control unit 12 while performing wireless charging on the device to-be-charged 30 according to the output power of the adaptor 40.

In the conventional wireless charging, it is impossible to adjust the output power of the wireless-charging control unit 12 after completion of power matching on the device to-be-charged. According to implementations herein, a communication protocol between the wireless-charging control unit 12 and the device to-be-charged 30 is modified. During control of wireless charging, two-way communication between the wireless-charging control unit 12 and the device to-be-charged 30 can be maintained. In this way, the output power of the wireless-charging control unit 12 can be adjusted in real time according to actual needs, which makes wireless charging more flexible.

In the second possible manner (that is, the wireless charging apparatus 10 is directly used as the adaptor), the wireless-charging control unit 12 can be further configured to receive an AC, convert an input power of the AC into an output power of the wireless charging apparatus 10, and perform wireless charging on the device to-be-charged 30 according to the output power of the wireless charging apparatus 10.

By integrating functions of the adaptor into the wireless charging apparatus, the number of devices or apparatuses required in wireless charging can be decreased, which is possible to simplify the implementation of wireless charging.

It should be understood that, the wireless charging apparatus 10 may be integrated with functions of the common adaptor, or may be integrated with functions of the adaptor with an adjustable output power provided in implementations. As an example, the wireless charging apparatus 10 is integrated with the functions of the adaptor with an adjustable output power. The wireless charging apparatus 10 can perform two-way communication with the device to-be-charged to control the output power of the wireless charging apparatus 10. A two-way communication mechanism between the wireless charging apparatus 10 and the device to-be-charged can adopt a communication mechanism similar to a two-way communication mechanism between the adaptor with an adjustable output power and the device to-be-charged during wired charging (for details thereof, reference can be made to the foregoing description). The difference lies in that a charging power is transmitted wirelessly between the wireless charging apparatus 10 and the device to-be-charged. The following will describe in detail a communication mechanism and a charging-control manner between the wireless charging apparatus 10 and the device to-be-charged in connection with specific examples.

In some examples, the wireless charging apparatus 10 can be operable with any one of the first charging mode and the second charging mode, and a speed at which the wireless charging apparatus 10 charges the device to-be-charged 30 in the second charging mode is higher than that in the first charging mode. The wireless charging apparatus 10 can perform two-way communication with the device to-be-charged 30 to control the output power of the wireless charging apparatus 10 as follows. The wireless charging apparatus 10 performs two-way communication with the device to-be-charged 30 to control the output power of the wireless charging apparatus 10 in the second charging mode.

In some examples, the wireless charging apparatus 10 can perform two-way communication with the device to-be-charged 30 to control the output power of the wireless charging apparatus 10 in the second charging mode as follows. The wireless charging apparatus 10 performs two-way communication with the device to-be-charged 30 to negotiate a charging mode of the wireless charging apparatus 10.

In some examples, the wireless charging apparatus 10 can perform two-way communication with the device to-be-charged 30 to control the output power of the wireless charging apparatus 10 in the second charging mode as follows. The wireless charging apparatus 10 performs two-way communication with the device to-be-charged 30 to control an output voltage of the wireless charging apparatus 10 in the second charging mode.

In some examples, the wireless charging apparatus 10 can perform two-way communication with the device to-be-charged 30 to control the output power of the wireless charging apparatus 10 in the second charging mode as follows. The wireless charging apparatus 10 performs two-way communication with the device to-be-charged 30 to control an output current of the wireless charging apparatus 10 in the second charging mode.

The above has elaborated functions of the wireless charging apparatus 10 with reference to various examples. However, the various examples are independent from each other. For instance, the wireless charging apparatus 10 may only implement functions of examples illustrated in FIG 1, or may only implement functions of examples illustrated in FIG 3, or may implement both functions of examples illustrated in FIG 1 and functions of examples illustrated in FIG 3.

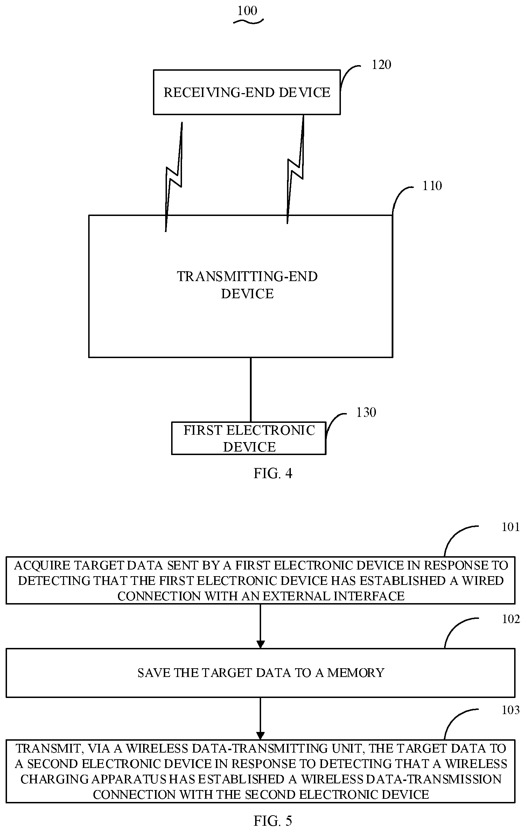

The following will describe a short-range wireless communication system according to implementations in connection with FIG 4.

As illustrated in FIG 4, the short-range wireless communication system 100 includes a transmitting-end device 110 and a receiving-end device 120. The transmitting-end device 110 and the receiving-end device 120 can achieve a contactless high-speed data transmission. For example, an extremely high frequency (EHF) antenna can be packaged in an integrated circuit (IC) chip of the transmitting-end device 110, such that the transmitting-end device 110 can achieve a high-speed (for example, up to a transmission speed of 6GB/s) wireless data transmission based on a high carrier frequency (such as 60GHz (gigahertz)). An EHF antenna can also be packaged in an IC chip of the receiving-end device 120, to achieve two-way communication between the transmitting-end device 110 and the receiving-end device 120. Wireless data transmission between the transmitting-end device 110 and the receiving-end device 120 can be achieved via an electromagnetic signal.

It should be understood that, high carrier frequency based short-range wireless communication has advantages of low power consumption, small volume, high transmission speed, and contactless transmission. On the other hand, high carrier frequency based short-range wireless communication can implement functions of a plug-and-play (PnP) module, which is possible to greatly improve signal integrity, allow for more flexible implementation of system, reduce standby power consumption, increase bandwidth amplitude, improve security of data transmission, and allow for compatibility with a high-speed video signal.

It should be understood that, a high carrier frequency can be a carrier frequency that can achieve high-speed wireless data transmission. The high carrier frequency may be a specific carrier frequency, or may be a carrier-frequency band, such as 30GHz∼300GHz, and the disclosure is not limited in this regard.

In some examples, the high carrier frequency is 60GHz.

In some examples, the transmitting-end device includes an IC chip with an EHF antenna packaged.

As an example, the transmitting-end device includes a separate transmission chip. For example, the separate transmission chip is an IC chip with an EHF antenna packaged. The separate transmission chip may have a transmission power of a high frequency of 60GHz. This can achieve data transmission at a high speed (for example, a transmission speed of 6GB/s) between the transmitting-end device and the receiving-end device.

According to implementations, the transmitting-end device 110 can be the wireless charging apparatus described above, and the receiving-end device 120 can be the device to-be-charged described above. The wireless charging apparatus that serves as the transmitting-end device 110 can be coupled with a first electronic device 130 through a USB cable, where an IC chip of the first electronic device 130 has no EHF antenna packaged. The first electronic device 130 can first store data to-be-transmitted or data to-be-backed-up in the transmitting-end device 110 through a data cable. Then the transmitting-end device 110 can transmit fast the data to-be-transmitted or data to-be-backed-up to the receiving-end device 120 via an electromagnetic signal.

Implementations provide a method for transmitting data. The method is applicable to a wireless charging apparatus. The wireless charging apparatus includes an external interface, a wireless data-transmitting unit, and a memory. The method includes the following. When a first electronic device is detected to have established a wired connection with the external interface, target data sent by the first electronic device are acquired. The target data are saved to the memory. When the wireless charging apparatus is detected to have established a wireless data-transmission connection with a second electronic device, the target data are transmitted to the second electronic device via the wireless data-transmitting unit, where the wireless data-transmitting unit is a high carrier frequency based short-range wireless communication unit, and the second electronic device has a high carrier frequency based short-range wireless communication unit.

In some implementations, after the target data are transmitted to the second electronic device via the wireless data-transmitting unit when the wireless charging apparatus is detected to have established the wireless data-transmission connection with the second electronic device, the method further includes the following. Query for recorded transmission information after an interrupted short-range wireless communication between the wireless charging apparatus and the second electronic device has been recovered, where the transmission information is indicative of data blocks in the target data that are not completely transmitted to the second electronic device. The data blocks in the target data that are not completely transmitted to the second electronic device are sent to the second electronic device.

In some implementations, after the target data are saved to the memory, the method further includes dividing the target data into multiple data blocks.

In some implementations, after the target data are transmitted to the second electronic device via the wireless data-transmitting unit, the method further includes deleting the target data from the memory.

In some implementations, the wireless charging apparatus further includes a wireless communication unit. The target data sent by the first electronic device can be further acquired as follows. When the first electronic device is detected to have established a wireless connection with the wireless communication unit through a wireless communication network, first data sent by the first electronic device are acquired through the wired connection, second data sent by the first electronic device are acquired through the wireless connection, and the target data are obtained according to the first data and the second data.

In some implementations, after the target data are saved to the memory, the method further includes generating a prompt message which indicates that the target data saved to the memory satisfy a transmission condition.

In some implementations, the wireless charging apparatus further includes a wireless-charging control unit. The method further includes performing, via the wireless-charging control unit, wireless charging on the second electronic device while transmitting, via the wireless data-transmitting unit, the target data to the second electronic device.

FIG 5 is a schematic flowchart of a method for transmitting data according to implementations. The method is applicable to a wireless charging apparatus. The wireless charging apparatus includes an external interface, a wireless-charging control unit, a wireless data-transmitting unit, and a memory.

The wireless-charging control unit can be configured to perform wireless charging on a device to-be-charged according to an output power of an electronic device that has functions of data processing and transmission when the electronic device is coupled with the external interface.

The wireless data-transmitting unit can be configured to transmit, through a wireless link, data stored in the electronic device to the device to-be-charged or transmit, through a wireless link, data stored in the device to-be-charged to the electronic device, when the wireless-charging control unit is performing wireless charging on the device to-be-charged according to the output power of the electronic device or when the wireless charging apparatus is detected to match the device to-be-charged.

The method for transmitting data according to implementations includes the following.

At block 101, when a first electronic device is detected to have established a wired connection with the external interface, target data sent by the first electronic device are acquired.

An IC chip of the first electronic device has no EHF antenna packaged. The first electronic device can be coupled with the external interface of the wireless charging apparatus through a data cable. The first electronic device can send to the wireless charging apparatus a request for sending data, where the request for sending data carries target data to-be-transmitted or data to-be-backed-up. When the wireless charging apparatus detects that the first electronic device has established the wired connection with the external interface and the wireless charging apparatus has received the request for sending data from the first electronic device, the wireless charging apparatus acquires the target data sent by the first electronic device according to the request for sending data. Compared with data transmission through a conventional personal hotspot, data transmission in a wired manner of data cable advantageously has a high transmission speed and high stability.

In some implementations, the wireless charging apparatus further includes a wireless communication unit. The target data sent by the first electronic device can be further acquired as follows. When the first electronic device is detected to have established a wireless connection with the wireless communication unit through a wireless communication network, first data sent by the first electronic device are acquired through the wired connection, second data sent by the first electronic device are acquired through the wireless connection, and the target data are obtained according to the first data and the second data. The wireless communication unit can be configured for a wireless communication connection, for example, through Bluetooth, Wi-Fi, near-field communication (NFC), personal hotspot, and the like.

By transmitting the target data in both a wired manner and a wireless manner, it is possible to increase data transmission speed between the first electronic device and the wireless charging apparatus.

At block 102, the target data are saved to the memory.

For example, after acquiring the target data sent by the first electronic device, the wireless charging apparatus can save the target data to the memory.

At block 103, when the wireless charging apparatus is detected to have established a wireless data-transmission connection with a second electronic device, the target data are transmitted to the second electronic device via the wireless data-transmitting unit.

The wireless data-transmitting unit is a high carrier frequency based short-range wireless communication unit, and the second electronic device has a high carrier frequency based short-range wireless communication unit. The second electronic device can be the device to-be-charged described above.

A mobile phone is taken as an example. The first electronic device can be a mobile phone that has no high-speed flash-transmission (i.e. Xender) chip. For example, when a user has a new mobile phone, mobile transfer is needed to migrate data in an old mobile phone to the new mobile phone, where the new mobile phone and a wireless charging base that matches the new mobile phone are both equipped with a high-speed flash-transmission chip, and the old mobile phone has no high-speed flash-transmission chip. Before the new mobile phone is in use, the old mobile phone can be coupled with an external interface of the wireless charging base through the data cable. At this time, the old mobile phone can migrate in advance target data to-be-migrated to the wireless charging base, and such a process will not affect use of the new mobile phone (for example, the user can still read a specification of the new mobile phone, install a SIM card, or the like during data migration). When the new mobile phone and the wireless charging base, which are both equipped with the high-speed flash-transmission chip, are connected through chip alignment, high-speed flash transmission can be achieved, and it takes only a few minutes to complete data transmission, which can provide a convenient and fast data migration experience for the user. In particular, for mobile phones of the same brand, due to relatively high matching degree between devices, data migration capability can be stronger, which can provide an even more convenient and fast data migration experience for a user buying mobile phones of the same brand.

For example, after the target data to-be-migrated in the first electronic device are saved to the memory of the wireless charging apparatus, the wireless charging apparatus can detect whether the wireless charging apparatus has established the wireless data-transmission connection with the second electronic device that serves as a target terminal.

Upon detecting that the wireless charging apparatus has not established the wireless data-transmission connection with the second electronic device, the wireless charging apparatus can perform other operations.

Upon detecting that the wireless charging apparatus has established the wireless data-transmission connection with the second electronic device, the wireless charging apparatus can transmit, via a wireless link, the target data to-be-migrated in the first electronic device to the second electronic device. For example, the second electronic device is placed onto the wireless charging apparatus for wireless charging. During the wireless charging, the wireless charging apparatus can establish the wireless data-transmission connection with the second electronic device. When the wireless charging apparatus has established the wireless data-transmission connection with the second electronic device, the wireless charging apparatus can transmit, via the wireless link, the target data to-be-migrated in the first electronic device to the second electronic device. For another example, the second electronic device is placed onto the wireless charging apparatus for device matching. Upon detecting that the second electronic device and the wireless charging apparatus are successfully matched, the wireless charging apparatus can establish the wireless data-transmission connection with the second electronic device, and as such, the wireless charging apparatus can transmit, via the wireless link, the target data to-be-migrated in the first electronic device to the second electronic device.

For a high carrier frequency based short-range wireless communication, while the wireless charging apparatus that serves as the transmitting-end device is transmitting target data to-be-transmitted to the second electronic device that serves as the receiving-end device, since alignment requirement between the transmitting-end device and the receiving-end device is high, the method further includes the following. The wireless charging apparatus queries for recorded transmission information after an interrupted short-range wireless communication between the wireless charging apparatus and the second electronic device has been recovered, where the transmission information is indicative of data blocks in the target data that are not completely transmitted to the second electronic device. The wireless charging apparatus sends to the second electronic device the data blocks in the target data that are not completely transmitted to the second electronic device.

As such, it is possible to resume from break-point between the wireless charging apparatus and the second electronic device.

In some implementations, before the short-range wireless communication between the wireless charging apparatus and the second electronic device is interrupted, for example, after the wireless charging apparatus saves the target data to the memory, the method further includes the following: the wireless charging apparatus divides the target data into multiple data blocks.

As an example, the target data is divided into multiple data blocks, such that each of the multiple data blocks has a transmission time that is shorter than or equal to a preset time, where the preset time may be Is (second).

In some examples, the wireless charging apparatus queries for the recorded transmission information as follows. The wireless charging apparatus queries for the recorded transmission information according to a record table, where the record table contains data blocks in the target data to-be-transmitted that are not completely transmitted to the second electronic device and/or data blocks in the target data to-be-transmitted that are completely transmitted to the second electronic device.

In some implementations, the wireless charging apparatus further includes a wireless-charging control unit. The wireless charging apparatus can establish a connection with the wireless-charging control unit. The method further includes performing, via the wireless-charging control unit, wireless charging on the second electronic device while transmitting, via the wireless data-transmitting unit, the target data to the second electronic device.

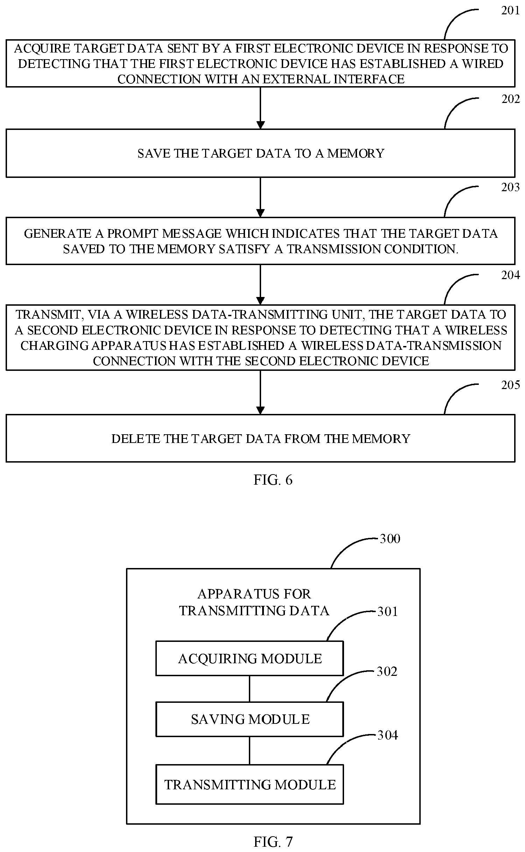

FIG 6 is a schematic flowchart of a method for transmitting data according to other implementations. The method includes the following.

At block 201, when a first electronic device is detected to have established a wired connection with an external interface, target data sent by the first electronic device are acquired.

An IC chip of the first electronic device has no EHF antenna packaged. The first electronic device can be coupled with an external interface of a wireless charging apparatus through a data cable. The first electronic device can send to the wireless charging apparatus a request for sending data, where the request for sending data carries target data to-be-transmitted or data to-be-backed-up. When the wireless charging apparatus detects that the first electronic device has established the wired connection with the external interface and the wireless charging apparatus has received the request for sending data from the first electronic device, the wireless charging apparatus acquires the target data sent by the first electronic device according to the request for sending data. Compared with data transmission through a conventional personal hotspot, data transmission in a wired manner of data cable advantageously has a high transmission speed and high stability.

In some implementations, the wireless charging apparatus further includes a wireless communication unit. The target data sent by the first electronic device can be further acquired as follows. When the first electronic device is detected to have established a wireless connection with the wireless communication unit through a wireless communication network, first data sent by the first electronic device are acquired through the wired connection, second data sent by the first electronic device are acquired through the wireless connection, and the target data are obtained according to the first data and the second data. The wireless communication unit can be configured for a wireless communication connection, for example, through Bluetooth, Wi-Fi, NFC, personal hotspot, and the like.

By transmitting the target data in both a wired manner and a wireless manner, it is possible to increase data transmission speed between the first electronic device and the wireless charging apparatus.

At block 202, the target data are saved to a memory.

For example, after acquiring the target data sent by the first electronic device, the wireless charging apparatus can save the target data to the memory.

At block 203, a prompt message is generated, where the prompt message indicates that the target data saved to the memory satisfy a transmission condition.

As an example, the prompt message includes change of light of an indicator light. The wireless charging apparatus further includes the indicator light. The indicator light is configured to be on (that is, light up) after the target data are completely stored in the wireless charging apparatus, to remind a user that storage of the target data is completed and the stored target data satisfy the transmission condition and to remind the user to choose to transmit the target data whenever needed. For example, while the wireless charging apparatus is acquiring the target data, the indicator light is in solid red. After the target data have been acquired and stored in the memory, the indicator light can turn solid blue. For another example, while the wireless charging apparatus is acquiring the target data, the indicator light flashes at a high frequency in blue. After the target data have been acquired and stored in the memory, the indicator light can turn solid blue.

As another example, the prompt message may include a prompt sound. For example, after the target data have been acquired and stored in the memory, the wireless charging apparatus plays the prompt sound, such as a beep or a voice message indicative of completion of data storage.

At block 204, when the wireless charging apparatus is detected to have established a wireless data-transmission connection with a second electronic device, the target data are transmitted to the second electronic device via a wireless data-transmitting unit.

The wireless data-transmitting unit is a high carrier frequency based short-range wireless communication unit, and the second electronic device has a high carrier frequency based short-range wireless communication unit. The second electronic device can be the device to-be-charged described above.

In some examples, the wireless charging apparatus and the second electronic device can be both equipped with the wireless data-transmitting unit. The wireless data-transmitting unit can be an IC chip with an EHF antenna embedded. Between devices that are both equipped with the IC chip, contactless high-speed data transmission can be achieved with aid of an EHF electromagnetic signal. For example, the wireless charging apparatus is a wireless charging base, where the wireless charging base is provided with the IC chip described above, and the second electronic device is also provided with the IC chip. In this case, when the second electronic device is placed onto the wireless charging base, it is possible to achieve contactless high-speed wireless data transmission between the wireless charging base and the second electronic device with aid of the EHF electromagnetic signal.

A mobile phone is taken as an example. The first electronic device can be a mobile phone that has no high-speed flash-transmission chip. For example, when a user has a new mobile phone, mobile transfer is needed to migrate data in an old mobile phone to the new mobile phone, where the new mobile phone and a wireless charging base that matches the new mobile phone are both equipped with a high-speed flash-transmission chip, and the old mobile phone has no high-speed flash-transmission chip. Before the new mobile phone is in use, the old mobile phone can be coupled with an external interface of the wireless charging base through the data cable. At this time, the old mobile phone can migrate in advance target data to-be-migrated to the wireless charging base, and such a process will not affect use of the new mobile phone (for example, the user can still read a specification of the new mobile phone, install a SIM card, or the like during data migration). When the new mobile phone and the wireless charging base, which are both equipped with the high-speed flash-transmission chip, are connected through chip alignment, high-speed flash transmission can be achieved, and it takes only a few minutes to complete data transmission, which can provide a convenient and fast data migration experience for the user. In particular, for mobile phones of the same brand, due to relatively high matching degree between devices, data migration capability can be stronger, which can provide an even more convenient and fast data migration experience for a user buying mobile phones of the same brand.

At block 205, the target data are deleted from the memory.

As an example, the wireless charging apparatus can delete the target data from the memory right after the target data have been transmitted to the second electronic device from the wireless charging apparatus.

As another example, when a preset duration has elapsed after the target data have been transmitted to the second electronic device from the wireless charging apparatus, the wireless charging apparatus can delete the target data from the memory.

It should be noted that, according to implementations, if the wireless charging apparatus is shared by multiple terminals, after the target data have been transmitted to the second electronic device that serves as a target terminal, the wireless charging apparatus can continue to store the target data for the preset duration instead of deleting immediately the target data, such that other terminals other than the target terminal can acquire the target data, which can achieve better utilization of the target data saved to the wireless charging apparatus.

As another example, after the wireless charging apparatus has transmitted the target data to the second electronic device and has received a request for sending data from another electronic device, the wireless charging apparatus can delete the previously stored target data from the memory before acquiring new target data.

In the method for transmitting data provided herein, when the first electronic device is detected to have established the wired connection with the external interface of the wireless charging apparatus, the target data sent by the first electronic device are acquired. The target data are saved to the memory. When the wireless charging apparatus is detected to have established the wireless data-transmission connection with the second electronic device, the target data are transmitted to the second electronic device via the wireless data-transmitting unit, where the wireless data-transmitting unit is the high carrier frequency based short-range wireless communication unit, and the second electronic device has the high carrier frequency based short-range wireless communication unit. According to implementations herein, during data migration from an old device to a new device, target data in the old device that is not capable of high-speed data transmission are first stored in the wireless charging apparatus. When coupled with the new device, the wireless charging apparatus can serve as a medium for data transmission, to transmit at a high speed the target data to the new device. The new device and the wireless charging apparatus are both equipped with the high carrier frequency based short-range wireless communication unit, such that the wireless charging apparatus can support high-speed data transmission in addition to wireless charging, which is possible to increase data transmission speed between devices.

Implementations provide an apparatus for transmitting data. The apparatus is applicable to a wireless charging apparatus. The wireless charging apparatus includes an external interface, a wireless data-transmitting unit, and a memory. The apparatus includes an acquiring module, a saving module, and a transmitting module. The acquiring module is configured to acquire target data sent by a first electronic device, when the first electronic device is detected to have established a wired connection with the external interface. The saving module is configured to save the target data to the memory. The transmitting module is configured to transmit, via the wireless data-transmitting unit, the target data to a second electronic device when the wireless charging apparatus is detected to have established a wireless data-transmission connection with the second electronic device, where the wireless data-transmitting unit is a high carrier frequency based short-range wireless communication unit, and the second electronic device has a high carrier frequency based short-range wireless communication unit.

In some implementations, the transmitting module is further configured to operate as follows. The transmitting module is configured to query for recorded transmission information after an interrupted short-range wireless communication between the wireless charging apparatus and the second electronic device has been recovered, where the transmission information is indicative of data blocks in the target data that are not completely transmitted to the second electronic device. The transmitting module is configured to send to the second electronic device the data blocks in the target data that are not completely transmitted to the second electronic device.

In some implementations, the saving module is further configured to divide the target data into multiple data blocks.

In some implementations, the wireless charging apparatus further includes a wireless communication unit. The acquiring module is further configured to operate as follows when the first electronic device is detected to have established a wireless connection with the wireless communication unit through a wireless communication network. The acquiring module is configured to acquire, through the wired connection, first data sent by the first electronic device, acquire, through the wireless connection, second data sent by the first electronic device, and obtain the target data according to the first data and the second data.

In some implementations, the apparatus for transmitting data further includes a prompting module. The prompting module is configured to generate a prompt message which indicates that the target data saved to the memory satisfy a transmission condition.

In some examples, the apparatus for transmitting data further includes a deleting module. The deleting module is configured to delete the target data from the memory.

In some examples, the wireless charging apparatus further includes a wireless-charging control unit. The transmitting module is further configured to perform, via the wireless-charging control unit, wireless charging on the second electronic device while transmitting, via the wireless data-transmitting unit, the target data to the second electronic device.

FIG 7 is a schematic structural diagram of an apparatus for transmitting data according to implementations. The apparatus is applicable to a wireless charging apparatus. The wireless charging apparatus includes an external interface, a wireless-charging control unit, a wireless data-transmitting unit, and a memory.

The apparatus 300 for transmitting data includes an acquiring module 301, a saving module 302, and a transmitting module 304. The acquiring module 301 is configured to acquire target data sent by a first electronic device, when the first electronic device is detected to have established a wired connection with the external interface. The saving module 302 is configured to save the target data to the memory. The transmitting module 304 is configured to transmit, via the wireless data-transmitting unit, the target data to a second electronic device when the wireless charging apparatus is detected to have established a wireless data-transmission connection with the second electronic device, where the wireless data-transmitting unit is a high carrier frequency based short-range wireless communication unit, and the second electronic device has a high carrier frequency based short-range wireless communication unit.

In some implementations, the wireless charging apparatus further includes a wireless communication unit. The acquiring module 301 is further configured to operate as follows when the first electronic device is detected to have established a wireless connection with the wireless communication unit through a wireless communication network. The acquiring module 301 is configured to acquire, through the wired connection, first data sent by the first electronic device, acquire, through the wireless connection, second data sent by the first electronic device, and obtain the target data according to the first data and the second data.

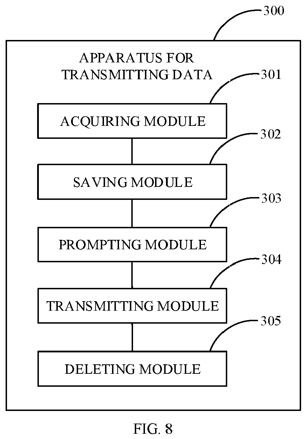

FIG 8 is a schematic structural diagram of an apparatus for transmitting data according to other implementations. In some implementations, the apparatus 300 further includes a prompting module 303 and a deleting module 305. The prompting module 303 is configured to generate a prompt message which indicates that the target data saved to the memory satisfy a transmission condition. The deleting module 305 is configured to delete the target data from the memory.

Implementations further provide an electronic device. The electronic device includes a processor and a wireless charging apparatus. The wireless charging apparatus includes an external interface, a wireless data-transmitting unit, and a memory. The processor is coupled with the wireless charging apparatus. The processor is configured to call computer programs stored in the memory to perform operations of the method for transmitting data provided in implementations.

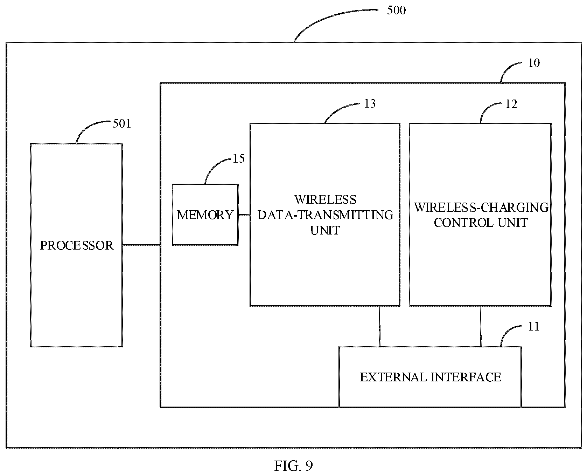

FIG 9 is a schematic structural diagram of an electronic device according to implementations.

The electronic device 500 includes a processor 501, a wireless charging apparatus 10, and other components. It can be appreciated by those skilled in the art that, the structure of the electronic device illustrated in FIG 9 does not constitute any limitation on an electronic device. The electronic device may include more or fewer components than illustrated or may combine certain components or have different configurations or arrangements of components.

The processor 501 is the control center of the electronic device and is configured to connect various parts of the whole electronic device through various interfaces and lines. The processor 501 runs or executes stored software programs and invokes stored data to perform various functions of the electronic device and process data, thereby monitoring the electronic device as a whole.

The wireless charging apparatus 10 includes an external interface 11, a wireless-charging control unit 12, a wireless data-transmitting unit 13, and a memory 15. The wireless-charging control unit 12 can be configured to perform wireless charging on a device to-be-charged according to an output power of an electronic device that has data processing and transmission functions when the external interface is coupled with the electronic device. The wireless data-transmitting unit 13 is configured to transmit, through a wireless link, data stored in the electronic device to the device to-be-charged, or to transmit, through a wireless link, data stored in the device to-be-charged to the electronic device, while the wireless-charging control unit is performing wireless charging on the device to-be-charged according to the output power of the electronic device or when the wireless charging apparatus is detected to match the device to-be-charged.

In some implementations, the processor 501 is configured to operate as follows. The processor 501 is configured to acquire target data sent by a first electronic device when the first electronic device is detected to have established a wired connection with the external interface 11. The processor 501 is configured to save the target data to the memory 15. The processor 501 is configured to transmit, via the wireless data-transmitting unit 13, the target data to a second electronic device when the wireless charging apparatus is detected to have established a wireless data-transmission connection with the second electronic device, where the wireless data-transmitting unit 13 is a high carrier frequency based short-range wireless communication unit, and the second electronic device has a high carrier frequency based short-range wireless communication unit.

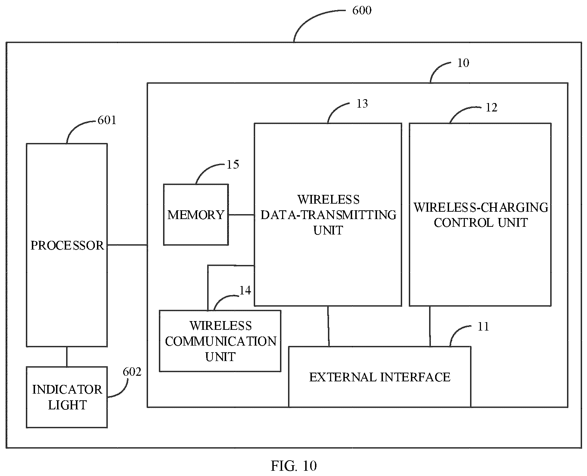

As illustrated in FIG 10, an electronic device 600 includes a processor 601, a wireless charging apparatus 10, an indicator light 602, and other components.

The processor 601 is the control center of the electronic device and is configured to connect various parts of the whole electronic device through various interfaces and lines. The processor runs or executes stored software programs and invokes stored data to perform various functions of the electronic device and process data, thereby monitoring the electronic device as a whole.

The wireless charging apparatus 10 includes an external interface 11, a wireless-charging control unit 12, a wireless data-transmitting unit 13, a wireless communication unit 14, and a memory 15. The wireless-charging control unit 12 can be configured to perform wireless charging on a device to-be-charged according to an output power of an electronic device that has data processing and transmission functions when the external interface is coupled with the electronic device. The wireless data-transmitting unit 13 can be configured to transmit, through a wireless link, data stored in the electronic device to the device to-be-charged, or to transmit, through a wireless link, data stored in the device to-be-charged to the electronic device, while the wireless-charging control unit is performing wireless charging on the device to-be-charged according to the output power of the electronic device or when the wireless charging apparatus is detected to match the device to-be-charged.

The indicator light 602 is configured to be on after the target data are completely stored in the wireless charging apparatus, to remind a user that storage of the target data is completed and the stored target data satisfy a transmission condition and to remind the user to choose to transmit the target data whenever needed. The indicator light 602 is further configured to be on when the wireless charging apparatus completes wireless charging on the device to-be-charged, to remind the user that charging is completed. Alternatively, the indicator light 602 is further configured to be on when the wireless charging apparatus succeeds in transmitting data to a terminal through a wireless link, to remind the user of completion of data transmission.

In some implementations, the processor 601 is configured to operate as follows. The processor 601 is configured to acquire target data sent by a first electronic device when the first electronic device is detected to have established a wired connection with the external interface 11. The processor 601 is configured to save the target data to the memory 15. The processor 601 is configured to transmit, via the wireless data-transmitting unit 13, the target data to a second electronic device when the wireless charging apparatus is detected to have established a wireless data-transmission connection with the second electronic device, where the wireless data-transmitting unit 13 is a high carrier frequency based short-range wireless communication unit, and the second electronic device has a high carrier frequency based short-range wireless communication unit.

In some implementations, the processor 601 is further configured to operate as follows after transmitting, via the wireless data-transmitting unit, the target data to the second electronic device when the wireless charging apparatus is detected to have established the wireless data-transmission connection with the second electronic device. The processor 601 is configured to query for recorded transmission information after an interrupted short-range wireless communication between the wireless charging apparatus and the second electronic device has been recovered, where the transmission information is indicative of data blocks in the target data that are not completely transmitted to the second electronic device. The processor 601 is configured to send to the second electronic device the data blocks in the target data that are not completely transmitted to the second electronic device.

In some implementations, the processor 601 is further configured to operate as follows after saving the target data to the memory. The processor 601 is configured to divide the target data into multiple data blocks.

In some implementations, the processor 601 is further configured to operate as follows after transmitting, via the wireless data-transmitting unit, the target data to the second electronic device. The processor 601 is configured to delete the target data from the memory.

In some implementations, in terms of acquiring the target data sent by the first electronic device, the processor 601 is configured to operate as follows when the first electronic device is detected to have established a wireless connection with the wireless communication unit through a wireless communication network. The processor 601 is configured to acquire, through the wired connection, first data sent by the first electronic device, acquire, through the wireless connection, second data sent by the first electronic device, and obtain the target data according to the first data and the second data.

In some implementations, the processor 601 is further configured to operate as follows after saving the target data to the memory. The processor 601 is configured to generate a prompt message which indicates that the target data saved to the memory satisfy a transmission condition.

In some implementations, the processor 601 is further configured to perform, via the wireless-charging control unit, wireless charging on the second electronic device while transmitting, via the wireless data-transmitting unit, the target data to the second electronic device.

Description of each of the foregoing implementations has its own emphasis. For part not described in detail in one implementation, reference can be made to the foregoing description of the method for transmitting data, which will not be repeated herein.

The apparatus for transmitting data provided herein and the method for transmitting data described above belong to the same concept. Any method provided in implementations of the method for transmitting data can be run on the apparatus for transmitting data. For details of the implementation process, reference can be made to the implementations of the method for transmitting data, which will not be repeated herein.

Implementations provide a computer readable storage medium. The computer readable storage medium is configured to store computer programs which, when executed by a computer, are operable with the computer to perform operations of the method for transmitting data provided in implementations.

Implementations provide a storage medium. The storage medium is configured to store computer programs. The computer programs are applicable to a wireless charging apparatus. The wireless charging apparatus includes an external interface, a wireless data-transmitting unit, and a memory. The computer programs, when executed by the computer, are operable with the computer to perform the method for transmitting data in any one of the foregoing implementations.

In some implementations, the computer programs, when executed by the computer, are operable with the computer to: acquire target data sent by a first electronic device when the first electronic device is detected to have established a wired connection with the external interface; save the target data to the memory; and transmit, via the wireless data-transmitting unit, the target data to a second electronic device when the wireless charging apparatus is detected to have established a wireless data-transmission connection with the second electronic device, where the wireless data-transmitting unit is a high carrier frequency based short-range wireless communication unit, and the second electronic device has a high carrier frequency based short-range wireless communication unit.

It should be noted that, for the method for transmitting data provide herein, those of ordinary skill in the art can understand that all or part of the operations of the method for transmitting data can be achieved by controlling relevant hardware via computer programs. The computer programs can be stored in a computer readable storage medium. For example, the computer programs can be stored in a memory and executed by at least one processor. The computer programs, when executed by the at least one processor, can be operable with the at least one processor to perform operations of the method for transmitting data. The storage medium may be a magnetic disk, an optical disk, a read only memory (ROM), a random access memory (RAM), or the like.

For the apparatus for transmitting data, various functional modules thereof can be integrated into one processing chip, or may be present as a number of physically separated modules, or two or more modules may be integrated into one. The integrated module may take the form of hardware or a software functional module. If the integrated module is implemented as a software functional module and sold or used as a standalone product, it may be stored in a computer readable storage medium. Examples of the storage medium may includes a ROM, a magnetic disk, an optical disk, or the like.

The above has described in detail the method and apparatus for transmitting data, the storage medium, and the electronic device provided in implementations. While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for transmitting data, being applicable to a wireless charging apparatus, the wireless charging apparatus comprising an external interface, a wireless data-transmitting unit, and a memory, and the method comprising:
acquiring target data sent by a first electronic device in response to detecting that the first electronic device has established a wired connection with the external interface;
saving the target data to the memory; and
transmitting, via the wireless data-transmitting unit, the target data to a second electronic device in response to detecting that the wireless charging apparatus has established a wireless data-transmission connection with the second electronic device, wherein the wireless data-transmitting unit is a high carrier frequency based short-range wireless communication unit, and the second electronic device has a high carrier frequency based short-range wireless communication unit.

2. The method of claim 1, further comprising:
after transmitting, via the wireless data-transmitting unit, the target data to the second electronic device in response to detecting that the wireless charging apparatus has established the wireless data-transmission connection with the second electronic device,
querying for recorded transmission information after an interrupted short-range wireless communication between the wireless charging apparatus and the second electronic device has been recovered, wherein the transmission information is indicative of data blocks in the target data that are not completely transmitted to the second electronic device; and
sending to the second electronic device the data blocks in the target data that are not completely transmitted to the second electronic device.

3. The method of claim 2, further comprising:
after saving the target data to the memory,
dividing the target data into a plurality of data blocks.

4. The method of claim 1, further comprising:
after transmitting, via the wireless data-transmitting unit, the target data to the second electronic device,
deleting the target data from the memory.

5. The method of claim 1, wherein the wireless charging apparatus further comprises a wireless communication unit, and acquiring the target data sent by the first electronic device further comprises:
in response to detecting that the first electronic device has established a wireless connection with the wireless communication unit through the wireless communication network,
acquiring, through the wired connection, first data sent by the first electronic device;
acquiring, through the wireless connection, second data sent by the first electronic device; and
obtaining the target data according to the first data and the second data.

6. The method of claim 1, further comprising:
after saving the target data to the memory,
generating a prompt message which indicates that the target data saved to the memory satisfy a transmission condition.

7. The method of claim 1, wherein the wireless charging apparatus further comprises a wireless-charging control unit, and the method further comprises:
performing, via the wireless-charging control unit, wireless charging on the second electronic device while transmitting, via the wireless data-transmitting unit, the target data to the second electronic device.

8. An apparatus for transmitting data, being applicable to a wireless charging apparatus, the wireless charging apparatus comprising an external interface, a wireless data-transmitting unit, and a memory, and the apparatus comprising:
an acquiring module configured to acquire target data sent by a first electronic device, when the first electronic device is detected to have established a wired connection with the external interface;
a saving module configured to save the target data to the memory; and
a transmitting module configured to transmit, via the wireless data-transmitting unit, the target data to a second electronic device when the wireless charging apparatus is detected to have established a wireless data-transmission connection with the second electronic device, wherein the wireless data-transmitting unit is a high carrier frequency based short-range wireless communication unit, and the second electronic device has a high carrier frequency based short-range wireless communication unit.

9. The apparatus of claim 8, wherein the transmitting module is further configured to:
query for recorded transmission information after an interrupted short-range wireless communication between the wireless charging apparatus and the second electronic device has been recovered, wherein the transmission information is indicative of data blocks in the target data that are not completely transmitted to the second electronic device; and
send to the second electronic device the data blocks in the target data that are not completely transmitted to the second electronic device.

10. The apparatus of claim 9, wherein the saving module is further configured to:
divide the target data into a plurality of data blocks.

11. The apparatus of claim 8, wherein the wireless charging apparatus further comprises a wireless communication unit, and the acquiring module is further configured to:
when the first electronic device is detected to have established a wireless connection with the wireless communication unit through a wireless communication network,
acquire, through the wired connection, first data sent by the first electronic device;
acquire, through the wireless connection, second data sent by the first electronic device; and
obtain the target data according to the first data and the second data.

12. The apparatus of claim 8, further comprising:
a prompting module configured to generate a prompt message which indicates that the target data saved to the memory satisfy a transmission condition.

13. A storage medium configured to store computer programs, the computer programs being applicable to a wireless charging apparatus, the wireless charging apparatus comprising an external interface, a wireless data-transmitting unit, and a memory, and the computer programs, when executed by a computer, being operable with the computer to:
acquire target data sent by a first electronic device in response to detecting that the first electronic device has established a wired connection with the external interface;
save the target data to the memory; and
transmit, via the wireless data-transmitting unit, the target data to a second electronic device in response to detecting that the wireless charging apparatus has established a wireless data-transmission connection with the second electronic device, wherein the wireless data-transmitting unit is a high carrier frequency based short-range wireless communication unit, and the second electronic device has a high carrier frequency based short-range wireless communication unit.

14. An electronic device, comprising a processor and a wireless charging apparatus, the wireless charging apparatus comprising an external interface, a wireless data-transmitting unit, and a memory, the processor being coupled with the wireless charging apparatus, and the processor being configured to call computer programs stored in the memory to:
acquire target data sent by a first electronic device in response to detecting that the first electronic device has established a wired connection with the external interface;
save the target data to the memory; and
transmit, via the wireless data-transmitting unit, the target data to a second electronic device in response to detecting that the wireless charging apparatus has established a wireless data-transmission connection with the second electronic device, wherein the wireless data-transmitting unit is a high carrier frequency based short-range wireless communication unit, and the second electronic device has a high carrier frequency based short-range wireless communication unit.

15. The electronic device of claim 14, wherein the processor is further configured to:
after transmitting, via the wireless data-transmitting unit, the target data to the second electronic device in response to detecting that the wireless charging apparatus has established the wireless data-transmission connection with the second electronic device,
query for recorded transmission information after an interrupted short-range wireless communication between the wireless charging apparatus and the second electronic device has been recovered, wherein the transmission information is indicative of data blocks in the target data that are not completely transmitted to the second electronic device; and
send to the second electronic device the data blocks in the target data that are not completely transmitted to the second electronic device.

16. The electronic device of claim 15, wherein the processor is further configured to:
after saving the target data to the memory,
divide the target data into a plurality of data blocks.

17. The electronic device of claim 14, wherein the processor is further configured to:
after transmitting, via the wireless data-transmitting unit, the target data to the second electronic device,
delete the target data from the memory.

18. The electronic device of claim 14, wherein the wireless charging apparatus further comprises a wireless communication unit, and the processor configured to acquire the target data sent by the first electronic device is further configured to:
in response to detecting that the first electronic device has established a wireless connection with the wireless communication unit through a wireless communication network,
acquire, through the wired connection, first data sent by the first electronic device;
acquire, through the wireless connection, second data sent by the first electronic device; and
obtain the target data according to the first data and the second data.

19. The electronic device of claim 14, wherein the processor is further configured to:
after saving the target data to the memory,
generate a prompt message which indicates that the target data saved to the memory satisfy a transmission condition.

20. The electronic device of claim 14, wherein the wireless charging apparatus further comprises a wireless-charging control unit, and the processor is further configured to:
perform, via the wireless-charging control unit, wireless charging on the second electronic device while transmitting, via the wireless data-transmitting unit, the target data to the second electronic device.
